# EUROPÄISCHE PATENTSCHRIFT

(11) **EP 1 064 173 B1**
(45) Veröffentlichungstag und Bekanntmachung des Hinweises auf die Patenterteilung: **15.05.2002**
(21) Anmeldenummer: 99919120.8
(22) Anmeldetag: 19.03.1999
(51) Int. Cl.: B60R 21/16

(54) **GASSACK MIT VARIABLEM VOLUMEN FÜR EIN AIRBAGMODUL**
VARIABLE-VOLUME AIR BAG FOR AN AIRBAG MODULE
COUSSIN GONFLABLE A VOLUME VARIABLE POUR UN MODULE D'AIRBAG

(30) Priorität: 20.03.1998 DE 19813832
(43) Veröffentlichungstag der Anmeldung: 03.01.2001
(73) Patentinhaber: Takata-Petri AG, 63743 Aschaffenburg (DE)
(72) Erfinder: HEYM, Axel, D-13187 Berlin (DE); JAHNKE, Harald, D-13353 Berlin (DE)
(74) Vertreter: Baumgärtel, Gunnar, Dr.
(86) Internationale Anmeldenummer: DE9900890
(87) Internationale Veröffentlichungsnummer: WO9948728

(56) Entgegenhaltungen:
- DE-U- 29 607 302
- DE-U- 29 720 461
- GB-A- 2 302 845
- PATENT ABSTRACTS OF JAPAN vol. 095, no. 006, 31. Juli 1995 (1995-07-31) & JP 07 069149 A (TAKATA KK), 14. März 1995 (1995-03-14)
- PATENT ABSTRACTS OF JAPAN vol. 015, no. 350 (M-1154), 5. September 1991 (1991-09-05) & JP 03 136946 A (IKEDA BUSSAN CO LTD), 11. Juni 1991 (1991-06-11)
- PATENT ABSTRACTS OF JAPAN vol. 017, no. 414 (M-1456), 3. August 1993 (1993-08-03) & JP 05 085295 A (NISSAN SHATAI CO LTD), 6. April 1993 (1993-04-06)

## Beschreibung

Die Erfindung betrifft einen Gassack mit variablem Volumen für ein Airbagmodul.

Zur Erzielung einer bestimmten Ausbreitungsrichtung in der Anfangsphase der Gassackentfaltung oder beim Einsatz von Stufengeneratoren ist es zweckmäßig, den Gassack nicht sofort auf sein gesamtes Volumen zu entfalten. Beim Einsatz der letztgenannten Generatoren wird im Falle der Aktivierung von nur einer Teilstufe der Gassack langsamer und mit weniger Gasmasse gefüllt. Durch die unzureichende Füllung des Gassacks verzögert sich der Aufbau der Membrankräfte im Gassackgewebe und damit die Rückhaltekraft am Insassen. Die Vorverlagerung des Insassen wäre sehr groß und Kontakte mit der steifen Innenraumkontur wären kaum zu vermeiden.

Es ist deshalb bekannt, den Gassack in diesem Fall mit einem verringerten Volumen zu entfalten.

So ist aus der US 5 362 101 bekannt, das Volumen des Gassacks dadurch zu verkleinern, daß er partiell in Falten gelegt wird, die miteinander vernäht werden. In der ersten Phase nach der Zündung des Gasgenerators, z.B. nach Zündung der ersten Stufe eines zweistufigen Gasgenerators, wird der Gassack nur bis zu dem durch die Nähte begrenzten verringertem Volumen entfaltet. Bei Erhöhung des Innendruckes durch Zündung der zweiten Stufe werden die genannten Nähte schließlich aufgerissen und der Gassack kann sich bis zu seinem vollen Volumen entfalten.

Der Nachteil der Volumenverringerung durch Reißnähte besteht darin, daß diese selbsttätig aufreißen müssen, daß aber aufgrund von Toleranzen im Gewebe sowie durch Umwelteinflüsse (z.B. Temperatur, Luftfeuchte) ein definiertes und reproduzierbares Aufreißen der Nähte kaum erreichbar ist. Weiterhin ist auch das Falten eines Gassacks mit abgenähten Bereichen und die Montage im Airbagmodul problematisch, weil der Gassack durch die Abnäher verzogen wird und dadurch die Handhabung im Produktionsprozeß erschwert wird.

Weiterhin sind Gassäcke für Airbagmodule bekannt, bei denen zur Erzielung bestimmter Entfaltungsrichtungen und zur Begrenzung des Volumens in der ersten Entfaltungsphase, d.h., in einer Zwischenstufe der Entfaltung, Fangbänder angeordnet sind. Diese sind sowohl innerhalb als auch außerhalb des Gassackes vorgesehen. Sie sind mit beiden Enden an gegenüberliegenden Seiten des Gassacks befestigt und sind so dimensioniert, daß sie bei einem vorbestimmten Innendruck vom Gassack abreißen oder selbst zerreißen. Ein solcher Gassack mit einem außen liegenden Fangband ist z.B. aus dem gattungsbildenden Dokument JP-A-07 069149 bekannt.

Bei diesen Fangbandanordnungen bestehen die gleichen Nachteile wie bei den vorgenannten Anordnungen mit Reißnähten.

Der Erfindung liegt die Aufgabe zugrunde, eine Begrenzung des Volumens des Gassacks mit geringerem Aufwand zu erreichen, wobei die Vergrößerung des Gassacks auf sein maximales Volumen mit verbesserter Reproduzierbarkeit möglich sein soll.

Erfindungsgemäß wird das gemäß den Merkmalen des Anspruchs 1 erreicht.

Bei einem Gassack für ein Airbagmodul mit variablem Volumen, ist erfindungsgemäß für die Begrenzung des Gassackvolumens in einer Zwischenstufe mindestens ein am Gassack lose geführtes und nach dem Zusammenraffen des Gassacks mit seinen Enden festgelegtes, ab einer bestimmten Belastung bei der Entfaltung des Gassacks lösbares oder reißbares Zugelement vorgesehen. Als Zugelement kann ein Zugseil oder ein starres Element vorgesehen sein. Als Zugseil kann vorzugsweise eine Kordel verwendet werden. Der Begriff Zugseil umfaßt aber auch ein Zugband.

Das Zugseil ist im vorliegenden Fall dazu bestimmt, den Gassack so zusammenzuraffen, daß bei der Entfaltung in einer ersten Phase ein geringeres Volumen mit Gas gefüllt werden muß als in einer späteren Phase. Das ist z.B. beim Einsatz von Stufengeneratoren von Bedeutung. Bei diesen wird im Falle der Aktivierung nur einer Teilstufe der Gassack langsamer und mit weniger Gasmasse gefüllt. Dadurch kommt es bei einem Gassack mit einem einzigen großen Volumen zu dessen unzureichender Füllung, wodurch der Aufbau der Membrankräfte im Gassackgewebe und damit die Rückhaltekraft am Insassen verzögert wird. Die Vorverlagerung des Insassen ist sehr groß und Kontakte des Insassen mit der steifen Innenraumkontur sind nicht zu vermeiden.

Durch Anpassen des Gassackvolumens bzw. der Gassackform mittels des Zugseiles an die jeweils bereitgestellte Gasmasse und damit an den Fülldruck kann dieser nachteilige Effekt des Stufengenerators kompensiert werden.

Die Verringerung des Gassackvolumens mittels eines Zugseiles oder mehrerer Zugseile weist zusätzlich den Vorteil auf, daß diese nicht mit dem Gassack verbunden sein müssen, wie es z. B. bei Fangbändern erforderlich ist. Vielmehr können auch die Enden des Zugseiles an beliebiger Stelle befestigt sein.

Nach dem Zusammenraffen des Gassacks mittels eines Zugseiles können dessen Enden dadurch festgelegt werden, daß sie miteinander verbunden werden. Das Zugseil umgibt dann den zusammengerafften Bereich des Gassacks, ohne mit diesem verbunden zu sein. Die Reproduzierbarkeit der Vergrößerung des Gassackvolumens wird nur noch durch das Zugseil selbst beeinflußt, nicht aber durch das Gassackgewebe und an diesem angebrachte Nähte. Das Gassackvolumen kann durch die Trennung der Enden des Zugseiles oder durch das Zerreißen des Zugseiles bei einer vorbestimmten Belastung vergrößert werden.

Eine weitere Möglichkeit die Enden des Zugseiles festzulegen besteht darin, mindestens ein Ende im Gehäuse des Airbagmoduls zu befestigen. Dadurch ergeben sich weitere Möglichkeiten, das Zugseil zu lösen, indem separat angeordnete Mechanismen für das Lösen mindestens eines Endes vorgesehen sind. Dadurch kann die Reproduzierbarkeit der Vergrößerung des Gassackvolumens weiter erhöht werden, da nun selbst die von Exemplar zu Exemplar geringfügig schwankende Festigkeit des Zugseiles ohne Einfluß bleibt.

Für das Lösen mindestens eines Endes des Zugseiles können z.B. thermische oder mechanische Mechanismen vorgesehen sein oder es kann auch eine Sprengkapsel vorgesehen sein.

Der Gassack kann mittels des Zugseiles so zusammengerafft sein, daß er partiell eingeschnürt ist oder in Kammern unterteilt ist. Im letztgenannten Fall liegt das Zugseil über einen Winkelbereich von mindestens 360° um den Gassack herum.

Das Zugseil ist in der Regel enganliegend am Gassack in Führungselementen geführt. Als solche können z.B. Laschen, Ringe oder Schläuche verwendet werden.

Das Zugseil kann außen und/oder innen am Gassack vorgesehen sein.

Einerseits ist das Zugseil vorzugsweise in Bereichen des Gassacks vorzusehen, mit denen der Insasse nach der Entfaltung des Gassacks keinen Kontakt hat. Damit wird mit Sicherheit ausgeschlossen, daß der Insasse bei einem außen liegenden Zugseil nach dessen Abreißen durch dieses verletzt wird. Andererseits können ein Zugseil oder mehrere Zugseile in unterschiedlichen Bereichen des Gassacks angebracht werden, um sowowhl die Größe als auch die Form des Gassacks in der ersten Phase der Entfaltung zu beeinflussen.

In einer Ausführungsform ist vorgesehen, daß sich ein Zugseil über eine vorbestimmte Länge des Gassacks im konstanten Abstand zum Rand des Einblasmundes des Gassacks erstreckt und daß beide Enden im Gehäuse des Airbagmoduls befestigt sind. Es ist aber auch möglich, daß die Führungselemente abwechselnd im unterschiedlichen Abstand zum Einblasmund des Gassacks vorgesehen sind, so daß das Zugseil zickzackförmig verläuft.

In einer weiteren Ausführungsform ist ausgehend von einem ersten umlaufenden Zugseil mindestens ein im wesentlichen senkrecht zu diesem in Richtung des Einblasmundes verlaufendes zweites Zugseil vorgesehen.

Bei einer anderen Ausführungsform ist mindestens eine Öse am Gassack für die Führung des Zugelementes vorgesehen.

Bei dieser Ausführungsform kann mindestens ein mit einem Ende fest mit dem Airbaggehäuse verbundenes Zugseil vorgesehen sein, das durch die Öse hindurch verläuft und mit dem anderen Ende in einer bei vorbestimmtem Druck öffnenden Haltevorrichtung befestigt ist.

In einer anderen Ausgestaltung ist mindestens ein mit einem Ende fest mit dem Airbaggehäuse verbundenes Zugelement vorgesehen, dessen anderes Ende mit einem Haken versehen ist, der in die Öse eingreift, und sich bei einer bestimmten Zugbelastung aufbiegt.

Die Erfindung soll in Ausführungsbeispielen anhand von Zeichnungen erläutert werden. Es zeigen:
- Fig. 1: eine Seitenansicht eines entfalteten Gassackes, der durch eine Kordel in seiner Ausbreitung begrenzt ist;
- Fig. 2: den Gassack nach Fig.1 nach dem Lösen der Kordel;
- Fig. 3: eine Befestigungsvorrichtung für die Enden der Kordel in einer Seitenansicht;
- Fig. 4: die Vorrichtung nach Fig. 3 in einer Draufsicht;
- Fig. 5: die Vorrichtung der Figuren 3 und 4 nach Freigabe der Enden der Kordel;
- Fig. 6: eine Seitenansicht eines entfalteten Gassacks mit einer zweiten Ausführungsform einer Befestigungsvorrichtung für die Enden der Kordel;
- Fig. 7: den Gassack nach Fig. 6 nach Freigabe des Kordelendes;
- Fig. 8: die beim Ausführungsbeispiel der Fig. 6 verwendete Befestigungsvorrichtung in einer Draufsicht;
- Fig. 9: die Befestigungsvorrichtung nach Fig. 8 nach Freigabe der Enden der Kordel;
- Fig. 10: die Seitenansicht eines entfalteten Gassacks, der parallel zum Rand des Einblasmundes von einer Kordel umschlungen ist;
- Fig. 11: einen Schnitt durch den Gassack nach Fig. 10, in Richtung der Pfeile XI - XI gesehen;
- Fig. 12: einen Schnitt durch einen ausgebreiteten Gassack mit einer außen am Gassack angebrachten Kordel;
- Fig. 13: den Gassack nach Fig. 12 in gefalteter Lage;
- Fig. 14: die schematische Darstellung eines Gassackes mit einer in vier Laschen, die auf einem Radius liegen, geführten Kordel;
- Fig. 15: die schematische Darstellung eines Gassackes mit einer in acht Laschen geführten Kordel, wobei je vier Laschen auf unterschiedlichen Radien liegen;
- Fig. 16: eine Seitenansicht eines entfalteten Gassackes mit einer umlaufenden Kordel;
- Fig. 17: eine Seitenansicht eines entfalteten Gassacks, mit einer Kordel, die mit dem Airbagmodul fest verbunden ist.
- Fig. 18: den Gassack nach Fig. 17 nach dem Lösen der Kordel.
- Fig. 19: eine Seitenansicht eines entfalteten Gassacks mit einem Haken an einem Ende einer Kordel;
- Fig. 20: den Gassack nach Fig. 19 nach der Freigabe der Kordel;
- Fig. 21: eine Seitenansicht eines entfalteten Gassacks mit einem Haken als Zugelement;
- Fig. 22: den Gassack nach Fig. 21 nach dem Lösen des Hakens von der zugeordneten Öse.

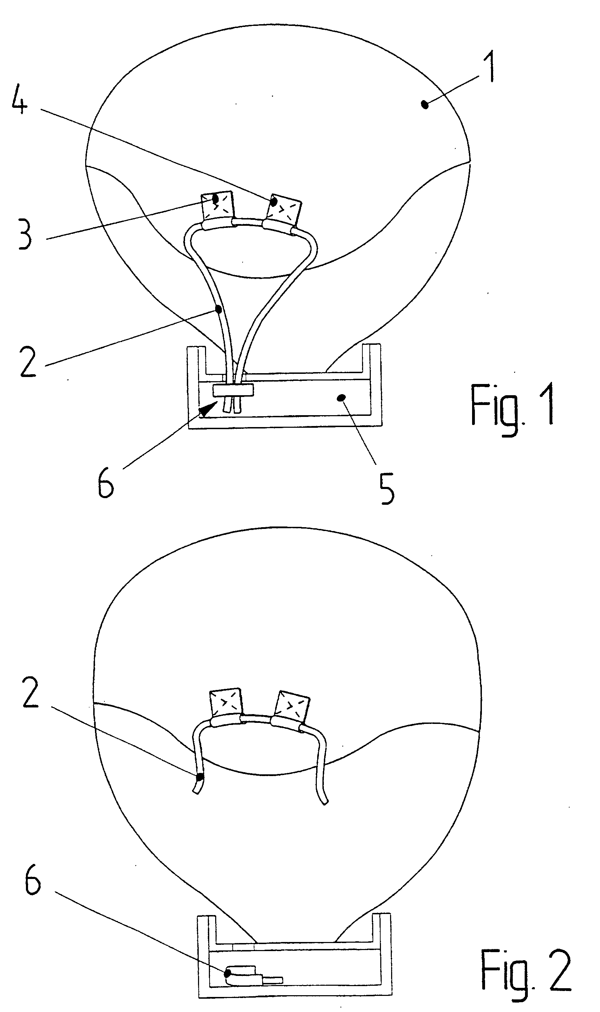

In der Fig. 1 ist ein Gassack 1 dargestellt, bei dem außen ein Zugseil in Form einer Kordel 2 angeordnet ist, die in zwei Laschen 3, 4 lose am Gassack 1 geführt ist. Der Gassack ist mittels der Kordel 2 teilweise zusammengerafft und deren Enden sind in einem Airbaggehäuse 5 in einer Haltevorrichtung 6 befestigt. Die Kordel verhindert in der ersten Phase der Entfaltung das Ausdehnen des Gassacks bis zu seiner vollen Größe.

Beim weiteren Anstieg des Drucks im Gassack werden die Enden der Kordel von der Haltevorrichtung freigegeben, und der Gassack kann sich bis zu seiner vollen Größe entfalten, wie es in Fig. 2 dargestellt ist.

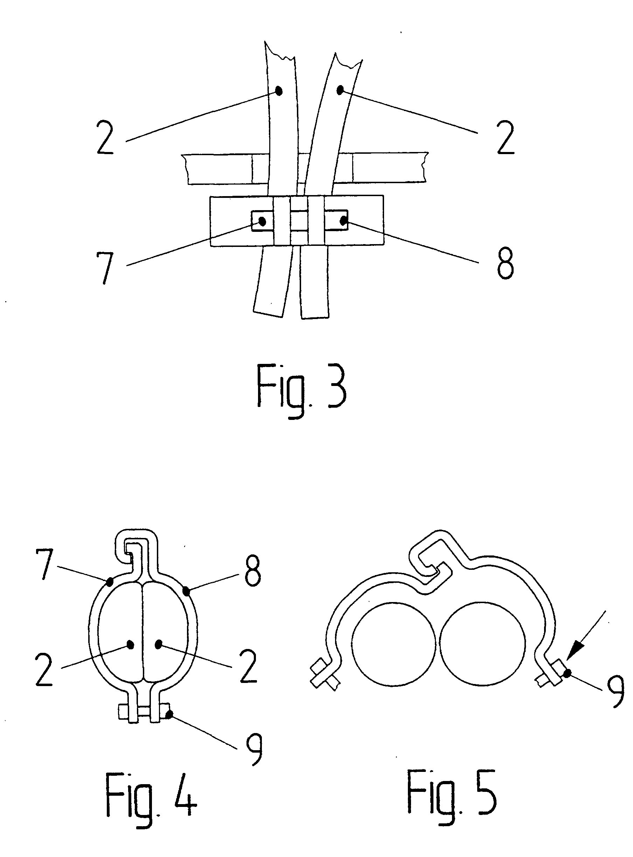

In den Figuren 3 bis 5 ist ein Ausführungsbeispiel einer Haltevorrichtung dargestellt. Diese besteht aus zwei Schellen 7, 8, die an einem Ende miteinander verhakt sind und am anderen Ende durch einen Sprengbolzen 9 miteinander verbunden sind. Diese Haltevorrichtung ermöglicht eine aktive Volumenadaption zum Beispiel in Verbindung mit einem mehrstufigen Gasgenerator, da der Zeitpunkt der Zerstörung des Sprengbolzens und damit der Freigabe der Kordel beliebig gewählt werden kann. Die Fig. 5 zeigt, daß die Schellen 7, 8 nach der Zerstörung des Sprengbolzens aufklappen und die Enden der Kordel 2 freigeben.

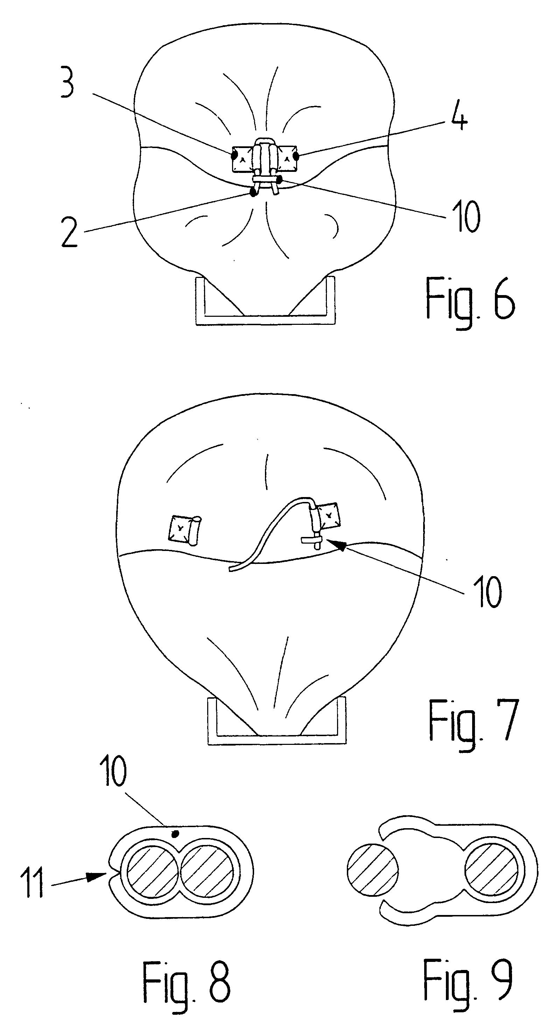

Beim Ausführungsbeispiel der Fig. 6 ist der Gassack ebenfalls durch eine Kordel 2, die in Laschen 3, 4 geführt ist, partiell gerafft. Die Enden der Kordel sind aber bei diesem Ausführungsbeispiel unmittelbar unterhalb der Laschen 3, 4 in einer Klemme 10 festgelegt. Diese weist eine Sollbruchstelle 11 auf (Fig. 8), die bei einem bestimmten Innendruck des Gassacks aufbricht (Fig. 9). In der Fig. 6 hat sich der Gassack soweit entfaltet, wie es die festgelegte Kordel zuläßt. Nach dem Aufbrechen der Klemme kann sich der Gassack zu seiner vollen Größe entfalten, wie es in Fig. *7* dargestellt ist. Bei diesem Ausführungsbeispiel ist nur eine passive Volumenadaption in Abhängigkeit vom Innendruck des Gassacks möglich.

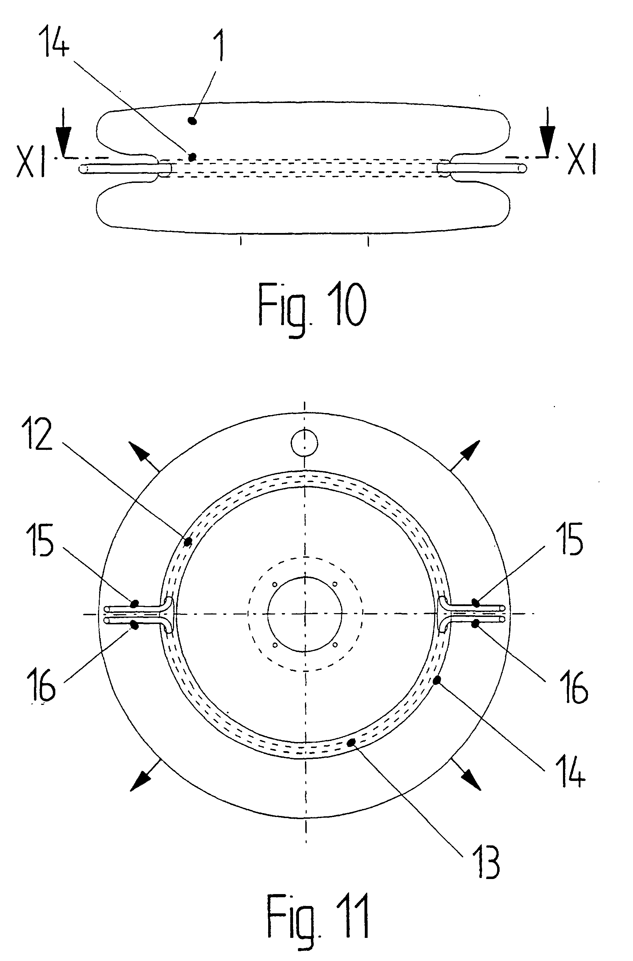

Beim Ausführungsbeispiel der Figuren 10 und 11 sind zwei Kordeln 12, 13 im Inneren des Gassacks in einem Schlauch 14 geführt. Jede der Kordeln erstreckt sich über einen halben Umfang des Gassacks und die Enden 15, 16 der Kordeln sind aus dem Gassack nach außen geführt. Sie können nach dem Zusammenraffen des Gassacks mittels einer der vorher dargestellten Vorrichtungen festgelegt werden.

Mittels der Kordeln ist der Gassack in der Darstellung der Figuren 10 und 11 teilweise zusammengeschnürt und er nimmt in der Anfangsphase der Entfaltung die dargestellte Form an. Nach dem Lösen der Kordeln entfaltet er sich vollständig.

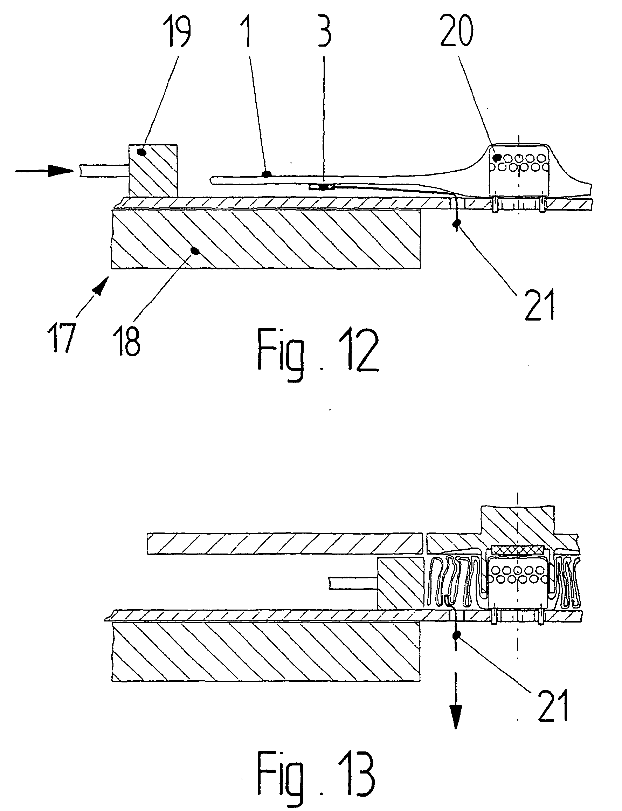

In den Figuren 12 und 13 ist schematisch eine Faltvorrichtung 17 dargestellt. Diese weist eine Grundplatte 18 mit einem Faltwerkzeug 19 auf. In der Fig. 12 steht dieses in einer Ausgangsstellung, so daß der ausgebreitete Gassack 1 mit einem bereits montierten Gasgenerator 20 aufgenommen werden kann. Es sind außen am Gassack befestigte Laschen vorgesehen, von denen nur eine Lasche 3 erkennbar ist. In den Laschen ist eine Kordel 21 geführt, wobei diese Kordel den Gassack ähnlich wie in der Fig. 11 halbseitig umschlingt, diesen aber auch voll umschlingen kann. Das eine Ende der Kordel ist durch die Grundplatte 18 nach außen geführt. Das andere Ende, das ebenfalls nach außen geführt wird, ist nicht dargestellt.

Beim Falten des Gassacks, wie es in Fig 13 dargestellt ist, wird die Kordel 21 nach unten aus der Grundplatte 18 herausgezogen und nach Abschluß des Faltvorganges bei der Montage des Gassacks im Airbaggehäuse, z.B. in der beim ersten Ausführungsbeispiel dargelegten Weise, befestigt.

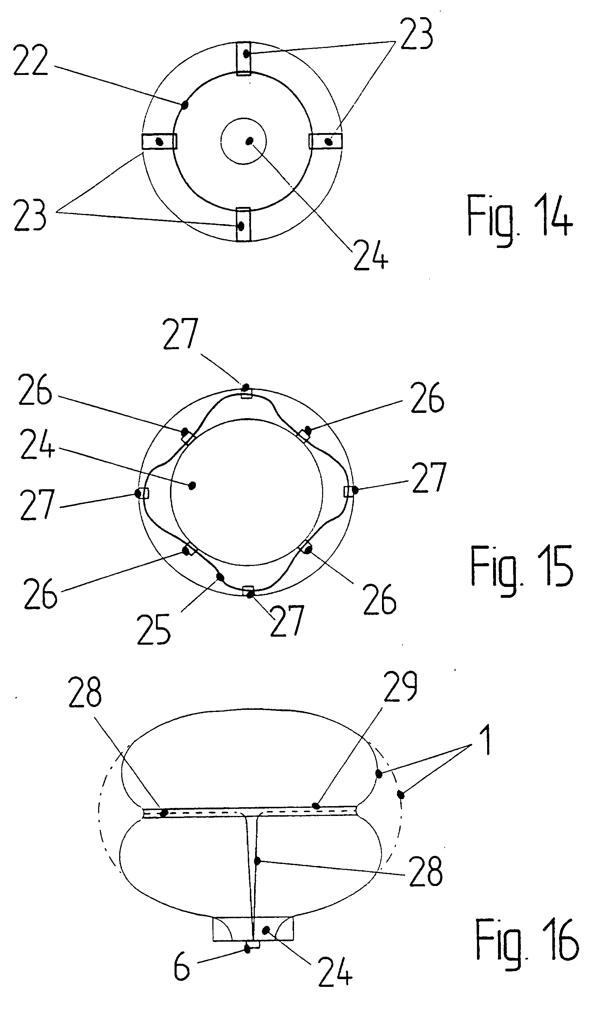

In der Fig. 14 ist nochmals schematisch die Anordnung einer in vier Laschen 23 geführten Kordel 22 dargestellt. Bei dieser Anordnung liegen die Laschen im gleichen Abstand zum Einblasmund 24.

Beim Ausführungsbeispiel der Fig. 15 ist eine Kordel 25 in acht Laschen geführt. Dabei sind vier Laschen 26 in einem geringeren Abstand vom Einblasmund 24 als die übrigen vier Laschen 27 angeordnet. Die Kordel verläuft deshalb bei dieser Ausführungsform zickzackförmig.

Im Ausführungsbeispiel der Fig. 16 ist eine umlaufende Kordel 28 in einer schlauchförmigen Führung 29 vorgesehen, deren Enden zum Einblasmund 24 des Gassacks geführt sind und dort in der Haltevorrichtung 6 befestigt sind. Die Figur zeigt den Gassack in der ersten Phase der Entfaltung, in der das Gassackvolumen durch die Kordel 28 begrenzt ist. Die gestrichelt ausgeführte Linie zeigt den Gassack nach dem Lösen der Kordel in seiner vollen Größe.

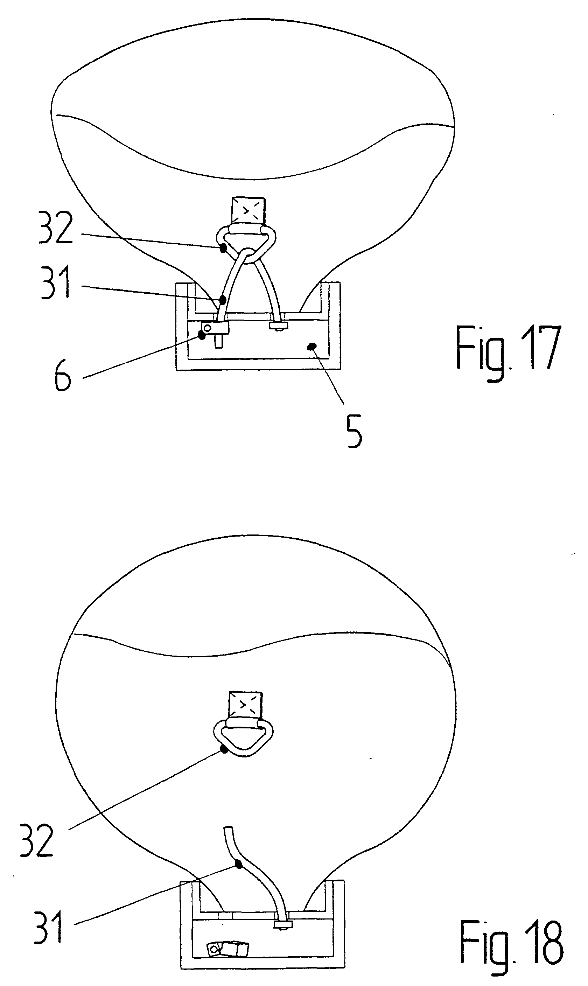

Beim Ausführungsbeispiel der Fig. 17 ist eine Kordel 31 vorgesehen, die mit einem Ende fest mit dem Airbaggehäuse 5 verbunden ist. Die Kordel ist durch eine am Gassack angelenkte Öse 32 geführt und mit ihrem anderen Ende mittels der bereits vorher beschriebenen Haltevorrichtung 6 im Airbaggehäuse 5 befestigt. Auch diese Kordel verhindert in der ersten Phase der Entfaltung das Ausdehnen des Gassacks bis zu seiner vollen Größe.

Beim weiteren Anstieg des Drucks im Gassack wird das in der Haltevorrichtung befestigte Ende der Kordel 31 freigegeben, und der Gassack kann sich bis zu seiner vollen Größe entfalten, wie es in Fig. 18 dargestellt ist. Dabei zieht sich die Kordel 31 aus der Öse 32 und bleibt mit einem Ende fest mit dem Airbaggehäuse 5 verbunden. Bei diesem Ausführungsbeispiel hängen also keine freien Kordelenden am Gassack, wodurch in erhöhtem Maße vermieden wird, daß der Insasse die Kordel kontaktiert.

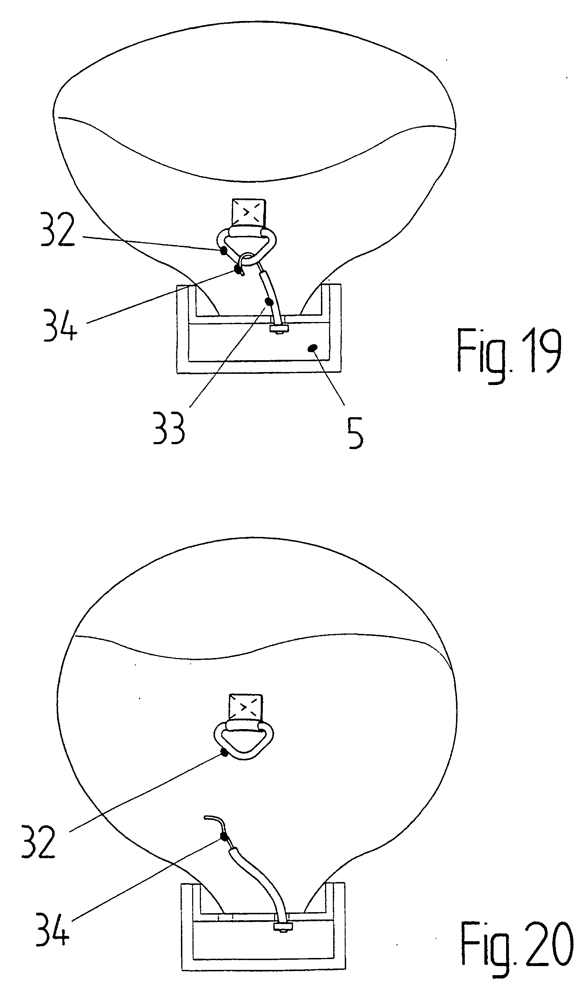

Beim Ausführungsbeispiel der Fig. 19 ist eine Kordel 33 vorgesehen, die mit einem Ende fest mit dem Airbaggehäuse 5 verbunden ist und am anderen Ende einen Haken 34 aufweist. Dieser greift in die Öse 32 ein wie es in der Fig. 19 erkennbar ist. Auf diese Weise wird die volle Entfaltung des Gassacks ebenfalls verhindert.

Der Haken 34 ist so ausgelegt, daß er sich bei weiterer Erhöhung des Druckes im Gassack aufbiegt und aus der Öse rutscht, so daß sich der Gassack voll entfalten kann, wie es in Fig. 20 dargestellt ist.

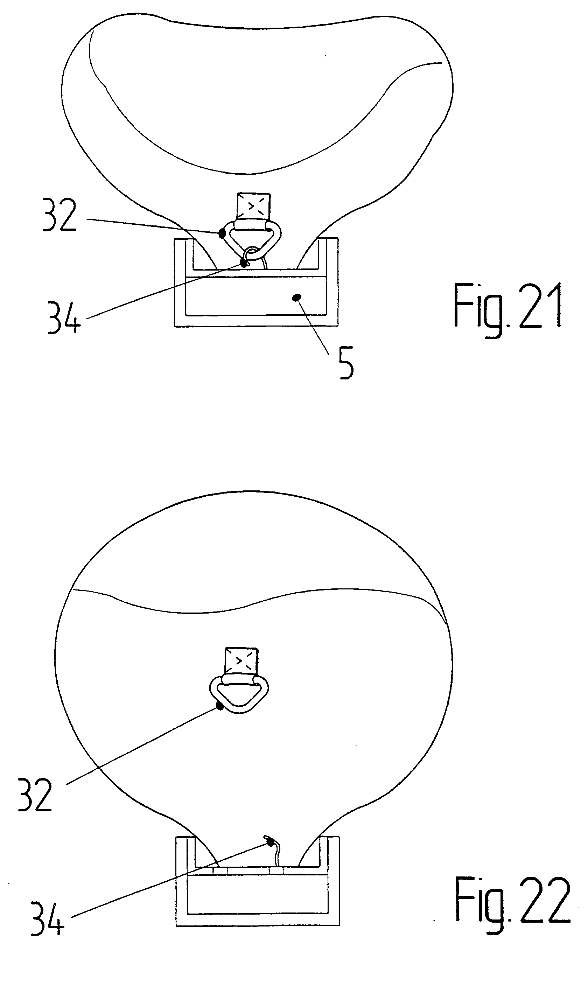

Beim Ausführungsbeispiel der Fig. 21 ist ein Haken 34 als starres Zugelement vorgesehen, daß in die Öse 32 eingreift und so die vollständige Entfaltung des Gassacks verhindert. Wie im vorhergehenden Ausführungsbeispiel biegt sich der Haken bei einem vorbestimmten Innendruck des Gassacks auf, so daß er aus der Öse rutscht und den Gassack freigibt, wie es in der Fig. 22 dargestellt ist.

## Patentansprüche

1. Gassack mit variablem Volumen für ein Airbagmodul, wobei,
für die Begrenzung des Gassackvolumens in einer Zwischenstufe der Entfaltung mindestens ein ab einer bestimmten Belastung bei der Entfaltung des Gassacks (1) lösbares oder reißbares Zugelement (2) vorgesehen ist,
**dadurch gekennzeichnet,**
**daß** das mindestens eine Zugelement (2) am Gassack (1) lose geführt und nach dem Zusammenraffen des Gassacks (1) mit seinen Enden festgelegt ist.

2. Gassack nach Anspruch 1, **dadurch gekennzeichnet, daß** als Zugelement ein Zugseil (2) oder ein starres Element (34) vorgesehen ist.

3. Gassack nach Anspruch **2, dadurch gekennzeichnet, daß** als Zugseil (2) eine Kordel verwendet wird.

4. Gassack nach Anspruch 2 oder 3, **dadurch gekennzeichnet, daß** die Enden des Zugseiles (2) beim gerafften Gassack miteinander verbunden sind.

5. Gassack nach mindestens einem der vorhergehenden Ansprüche **2 bis 4, dadurch gekennzeichnet, daß** mindestens ein Ende des Zugseiles (2) im Gehäuse (5) des Airbagmoduls befestigt ist.

6. Gassack nach Anspruch 5, **dadurch gekennzeichnet, daß** das im Gehäuse (5) befestigte Ende des Zugseiles durch separat angesteuerte Mechanismen lösbar ist.

7. Gassack nach Anspruch 5 oder 6, **dadurch gekennzeichnet, daß** das im Gehäuse befestigte Ende des Zugseiles thermisch lösbar ist.

8. Gassack nach mindestens einem der Ansprüche 5 bis 7, **dadurch gekennzeichnet, daß** das im Gehäuse befestigte Ende des Zugseiles durch mechanische Einwirkungen lösbar ist.

9. Gassack nach mindestens einem der Ansprüche 5 bis 8, **dadurch gekennzeichnet, daß** für das Lösen des im Gehäuse befestigten Endes des Zugseiles mindestens eine Sprengkapsel vorgesehen ist.

10. Gassack nach mindestens einem der vorhergehenden Ansprüche **2 bis 9, dadurch gekennzeichnet, daß** dieser mittels des Zugseiles (12, 13) so zusammengerafft ist, daß er partiell eingeschnürt ist oder in Kammern unterteilt ist.

11. Gassack nach mindestens einem der vorhergehenden Ansprüche **2 bis 10, dadurch gekennzeichnet, daß** das Zugseil eng anliegend am Gassack in Führungselementen (3, 4, 14) geführt ist.

12. Gassack nach mindestens einem der vorhergehenden Ansprüche **2 bis 11**, **dadurch gekennzeichnet, daß** das Zugseil in Laschen (3, 4), Ringen (32) oder Schläuchen (14) geführt ist.

13. Gassack nach mindestens einem der vorhergehenden Ansprüche **2 bis 12, dadurch gekennzeichnet, daß** das Zugseil außen und/oder innen am Gassack vorgesehen ist.

14. Gassack nach mindestens einem der vorhergehenden Ansprüche **2 bis 13, dadurch gekennzeichnet, daß** das Zugseil in Bereichen des Gassacks vorgesehen ist, mit denen der Insasse nach der Entfaltung des Gassacks keinen Kontakt hat.

15. Gassack nach mindestens einem der vorhergehenden Ansprüche **2 bis 14, dadurch gekennzeichnet, daß** sich ein Zugseil (28) über eine vorbestimmte Länge des Gassacks (1) im konstanten Abstand zum Rand des Einblasmundes (24) des Gassacks erstreckt und daß beide Enden im Airbaggehäuse (5) befestigt sind.

16. Gassack nach mindestens einem der vorhergehenden Ansprüche **11 bis 15, dadurch gekennzeichnet, daß** die Führungselemente (26, 27) abwechselnd im unterschiedlichen Abstand zum Einblasmund des Gassacks vorgesehen sind.

17. Gassack nach mindestens einem der vorhergehenden Ansprüche **2 bis 16**, **dadurch gekennzeichnet, daß** ausgehend von einem ersten umlaufenden Zugseil mindestens ein im wesentlichen senkrecht zu diesem in Richtung des Einblasmundes verlaufendes zweites Zugseil vorgesehen ist.

18. Gassack nach mindestens einem der vorhergehenden Ansprüche **2 bis 17**, **dadurch gekennzeichnet, daß** mindestens eine Öse (32) am Gassack für die Führung des Zugelementes vorgesehen ist.

19. Gassack nach Anspruch 18, **dadurch gekennzeichnet, daß** mindestens ein mit einem Ende fest mit dem Airbaggehäuse (5) verbundenes Zugseil (31) vorgesehen ist, das durch die Öse (32) hindurch verläuft und mit dem anderen Ende in einer bei vorbestimmtem Druck öffnenden Haltevorrichtung (6) befestigt ist.

20. Gassack nach Anspruch 18 oder 19, **dadurch gekennzeichnet, daß** mindestens ein mit einem Ende fest mit dem Airbaggehäuse (5) verbundenes Zugelement (33) vorgesehen ist, dessen anderes Ende mit einem Haken (34) versehen ist, der in die Öse (32) eingreift, und sich bei einer bestimmten Zugbelastung aufbiegt.

## Claims

1. Variable-volume airbag for an airbag module, in which, in order to limit the airbag volume in an intermediate stage of the unfolding, at least one pull element (2) is provided which can be released or torn after being subjected to a certain stress during the unfolding of the airbag (1), **characterized in that** the at least one pull element (2) is loosely guided on the airbag (1) and after the airbag (1) is gathered together is secured by its ends.

2. Airbag according to Claim 1, **characterized in that** a pull cable (2) or a rigid element (34) is provided as the pull element.

3. Airbag according to Claim 2, **characterized in that** a cord is used as the pull cable (2).

4. Airbag according to Claim 2 or 3, **characterized in that** when the airbag is gathered the ends of the pull cable (2) are connected to one another.

5. Airbag according to at least one of the preceding Claims 2 to 4, **characterized in that** at least one end of the pull cable (2) is fastened in the housing (5) of the airbag module.

6. Airbag according to Claim 5, **characterized in that** that end of the pull cable which is fastened in the housing (5) can be released by separately activated mechanisms.

7. Airbag according to Claim 5 or 6, **characterized in that** that end of the pull cable which is fastened in the housing can be released thermally.

8. Airbag according to at least one of Claims 5 to 7, **characterized in that** that end of the pull cable which is fastened in the housing can be released by mechanical actions.

9. Airbag according to at least one of Claims 5 to 8, **characterized in that** at least one detonating cap is provided for the release of that end of the pull cable which is fastened in the housing.

10. Airbag according to at least one of the preceding Claims 2 to 9, **characterized in that** the said airbag is gathered together by means of the pull cable (12, 13) in such a manner that it is partially constricted or is subdivided into chambers.

11. Airbag according to at least one of the preceding Claims 2 to 10, **characterized in that** the pull cable is guided such that it bears closely against the airbag in guide elements (3, 4, 14).

12. Airbag according to at least one of the preceding Claims 2 to 11, **characterized in that** the pull cable is guided in tabs (3, 4), rings (32) or flexible tubes (14).

13. Airbag according to at least one of the preceding Claims 2 to 12, **characterized in that** the pull cable is provided on the outside and/or inside of the airbag.

14. Airbag according to at least one of the preceding Claims 2 to 13, **characterized in that** the pull cable is provided in regions of the airbag with which the occupant does not have contact after the unfolding of the airbag.

15. Airbag according to at least one of the preceding Claims 2 to 14, **characterized in that** a pull cable (28) extends over a predetermined length of the airbag (1) at a constant distance from the edge of the blow-in mouth (24) of the airbag, and **in that** the two ends are fastened in the airbag housing (5).

16. Airbag according to at least one of the preceding Claims 11 to 15, **characterized in that** the guide elements (26, 27) are provided alternating at a different distance from the blow-in mouth of the airbag.

17. Airbag according to at least one of the preceding Claims 2 to 16, **characterized in that** starting from a first circumferential pull cable, at least one second pull cable is provided which runs in the direction of the blow-in mouth essentially perpendicularly with respect to the first pull cable.

18. Airbag according to at least one of the preceding Claims 2 to 17, **characterized in that** at least one eyelet (32) is provided on the airbag for the guiding of the pull element.

19. Airbag according to Claim 18, **characterized in that** at least one pull cable (31) is provided which is connected fixedly to the airbag housing (5) by one end, runs through the eyelet (32) and is fastened by the other end in a retaining device (6) which opens at a predetermined pressure.

20. Airbag according to Claim 18 or 19, **characterized in that** at least one pull element (33) is provided which is connected fixedly to the airbag housing (5) by one end and whose other end is provided with a hook (34) which engages in the eyelet (32) and bends up at a certain tensile stress.

## Revendications

1. Coussin gonflable à volume variable pour un module de coussin de sécurité gonflable,
dans lequel
il est prévu, pour limiter le volume du coussin gonflable lors d'une étape intermédiaire du déploiement, au moins un élément de traction (2) dissociable ou arrachable à partir d'une contrainte déterminée, au cours du déploiement dudit coussin gonflable (1),
**caractérisé par le fait**
**que** l'élément de traction (2) prévu au minimum est guidé avec jeu sur le coussin gonflable (1), et est arrêté par ses extrémités après la contraction dudit coussin gonflable (1).

2. Coussin gonflable selon la revendication 1, **caractérisé par le fait qu'**un câble de traction (2) ou un élément rigide (34) est prévu en tant qu'élément de traction.

3. Coussin gonflable selon la revendication 2, **caractérisé par le fait qu'**un cordon est utilisé en tant que câble de traction (2).

4. Coussin gonflable selon la revendication 2 ou 3, **caractérisé par le fait que** les extrémités du câble de traction (2) sont reliées l'une à l'autre à l'état contracté dudit coussin gonflable.

5. Coussin gonflable selon au moins l'une des revendications précédentes 2 à 4, **caractérisé par le fait qu'**au moins une extrémité du câble de traction (2) est fixée dans le boîtier (5) du module de coussin de sécurité gonflable.

6. Coussin gonflable selon la revendication 5, **caractérisé par le fait que** l'extrémité du câble de traction, fixée dans le boîtier (5), peut être dissociée par des mécanismes activés séparément.

7. Coussin gonflable selon la revendication 5 ou 6, **caractérisé par le fait que** l'extrémité du câble de traction fixée dans le boîtier est dissociable thermiquement.

8. Coussin gonflable selon au moins l'une des revendications 5 à 7, **caractérisé par le fait que** l'extrémité du câble de traction, fixée dans le boîtier, peut être dissociée par des actions mécaniques.

9. Coussin gonflable selon au moins l'une des revendications 5 à 8, **caractérisé par le fait qu'**au moins une capsule détonante est prévue pour la dissociation de l'extrémité du câble de traction qui est fixée dans le boîtier.

10. Coussin gonflable selon au moins l'une des revendications précédentes 2 à 9, **caractérisé par le fait que** ledit coussin est contracté, au moyen du câble de traction (12, 13), de telle sorte qu'il soit partiellement resserré ou subdivisé en des chambres.

11. Coussin gonflable selon au moins l'une des revendications précédentes 2 à 10, **caractérisé par le fait que** le câble de traction est guidé dans des éléments de guidage (3, 4, 14) en étant étroitement appliqué contre ledit coussin gonflable.

12. Coussin gonflable selon au moins l'une des revendications précédentes 2 à 11, **caractérisé par le fait que** le câble de traction est guidé dans des pattes (3, 4), dans des bagues (32) ou dans des flexibles (14).

13. Coussin gonflable selon au moins l'une des revendications précédentes 2 à 12, **caractérisé par le fait que** le câble de traction est prévu à l'extérieur et/ou à l'intérieur dudit coussin gonflable.

14. Coussin gonflable selon au moins l'une des revendications précédentes 2 à 13, **caractérisé par le fait que** le câble de traction est prévu dans des régions dudit coussin gonflable avec lesquelles l'occupant du véhicule n'a aucun contact après le déploiement dudit coussin gonflable.

15. Coussin gonflable selon au moins l'une des revendications précédentes 2 à 14, **caractérisé par le fait qu'**un câble de traction (28) s'étend sur une longueur prédéterminée dudit coussin gonflable (1), à distance constante vis-à-vis du bord de l'embout de gonflage (24) dudit coussin gonflable ; et **par le fait que** les deux extrémités sont fixées dans le boîtier (5) du coussin de sécurité gonflable.

16. Coussin gonflable selon au moins l'une des revendications précédentes 11 à 15, **caractérisé par le fait que** les éléments de guidage (26, 27) sont prévus, en alternance, à une distance différente vis-à-vis de l'embout de gonflage dudit coussin gonflable.

17. Coussin gonflable selon au moins l'une des revendications précédentes 2 à 16, **caractérisé par le fait qu'**au moins un second câble de traction s'étendant en direction de l'embout de gonflage est prévu à partir d'un premier câble périphérique de traction, pour l'essentiel perpendiculairement à ce dernier.

18. Coussin gonflable selon au moins l'une des revendications précédentes 2 à 17, **caractérisé par le fait qu'**au moins un oeillet (32) est prévu sur ledit coussin gonflable, pour guider l'élément de traction.

19. Coussin gonflable selon la revendication 18, **caractérisé par le fait qu'**il est prévu au moins un câble de traction (31) qui est relié rigidement, par une extrémité, au boîtier (5) du coussin de sécurité gonflable, traverse l'oeillet (32) et est fixé, par l'autre extrémité, dans un dispositif de retenue (6) s'ouvrant lorsqu'il règne une pression prédéterminée.

20. Coussin gonflable selon la revendication 18 ou 19, **caractérisé par le fait qu'**il est prévu au moins un élément de traction (33) qui est relié rigidement, par une extrémité, au boîtier (5) du coussin de sécurité gonflable, et dont l'autre extrémité est munie d'un crochet (34) pénétrant dans l'oeillet (32) et se cintrant en cas de contrainte de traction déterminée.
